# EUROPÄISCHE PATENTSCHRIFT

(11) **EP 2 394 440 B1**
(45) Veröffentlichungstag und Bekanntmachung des Hinweises auf die Patenterteilung: **21.11.2018**
(21) Anmeldenummer: 10705532.9
(22) Anmeldetag: 28.01.2010
(51) Int. Cl.: H04N 17/00

(54) **VERFAHREN ZUR KALIBRIERUNG EINES KAMERABASIERTEN SYSTEMS**
METHOD FOR CALIBRATING A CAMERA-BASED SYSTEM
PROCÉDÉ D'ÉTALONNAGE D'UN SYSTÈME AVEC CAMÉRAS

(30) Priorität: 06.02.2009 DE 102009007840
(43) Veröffentlichungstag der Anmeldung: 14.12.2011
(73) Patentinhaber: Automotive Distance Control Systems GmbH, 88131 Lindau/Bodensee (DE)
(72) Erfinder: ALMEIDA, Carlos, 64354 Reinheim-Zeilhard (DE); SCHAALE, Christian, 88138 Weißensberg (DE); FECHNER, Thomas, 88142 Wasserburg (DE)
(74) Vertreter: Bobbert, Christiana
(86) Internationale Anmeldenummer: PCT/DE2010/000084
(87) Internationale Veröffentlichungsnummer: WO 2010/088876

(56) Entgegenhaltungen:
- WO-A1-01/77763
- DE-A1-102006 056 180
- US-A- 6 097 023
- US-A1- 2006 125 919

## Beschreibung

Die Erfindung betrifft ein Verfahren zur Kalibrierung eines kamerakamerabasierten Systems eines Fahrzeugs mit einer Scheibe, insbesondere eines kamerabasierten Fahrerassistenzsystems.

Üblicherweise werden derartige kamerabasierte Systeme am Ende eines Produktionsbandes während der Fahrzeugherstellung mittels spezieller Testobjekte kalibriert, wobei sowohl eine Ausrichtung eines zu erfassenden Bereiches als auch eine optimale Farberfassung und ein Weißabgleich eingestellt werden. Insbesondere bei derartigen Systemen, bei welchen eine Kamera in einem Innenraum des Fahrzeugs angeordnet ist und eine Bilderfassung durch eine Scheibe des Fahrzeugs hindurch erfolgt, muss bei einem Austausch der Scheibe, wenn diese nicht durch eine Scheibe gleichen Typs ersetzt wird, eine erneute Kalibrierung erfolgen, um Qualitätseinbußen zu vermeiden, da sich unterschiedliche Scheibentypen sehr stark in ihren Transmissionseigenschaften unterscheiden. Zu diesem Zweck sind im System für die verschiedenen Typen der Scheiben entsprechende auszuwählende Parametersätze hinterlegt oder das System wird individuell an die neue Scheibe angepasst. Diese Neukalibrierung muss in einer Werkstatt von Fachkräften durchgeführt werden.

Aus der DE 10 2006 056 180 A1 sind ein Verfahren und eine Vorrichtung zum Kalibrieren eines Bildsensors im Kraftfahrzeug bekannt. Die Kalibrierung erfolgt dabei in Abhängigkeit der Eigenschaften einer Fahrzeugscheibe. Die Vorrichtung umfasst einen Bildsensor zur Erfassung von Umgebungsinformationen, eine Rechnereinheit, womit erfasste Umgebungsinformationen ausgewertet werden, sowie ein Auswahlmittel zur Auswahl von Parametereinstellungen des Bildsensors. Im Rahmen des Verfahrens wird wenigstens eine Markierung auf der Fahrzeugscheibe mittels eines Bildsensors erfasst und ausgewertet. Anhand der erfassten Markierung werden Eigenschaften der Fahrzeugscheibe bestimmt. Es erfolgt dabei eine für die Erfassung von Bildinformationen geeignete Parametereinstellung des Bildsensors anhand der bestimmten Eigenschaften der Fahrzeugscheibe.

Nachteilig ist dabei, dass nur Fahrzeugscheiben verwendet werden können, welche eine erfassbare und identifizierbare Markierung aufweisen, wodurch ein zusätzlicher Produktionsaufwand zur Herstellung dieser Fahrzeugscheiben erforderlich ist. Werden Fahrzeugscheiben eingesetzt, welche keine derartige Markierung aufweisen, erfolgt keine Kalibrierung, woraus Qualitätseinbußen bei der Erfassung von Umgebungsinformationen resultieren. Zudem ist es in bekannten Verfahren erforderlich, eine Fahrzeugscheibe zunächst mit einer Markierung zu versehen, die Informationen über die Fahrzeugscheibe enthält. Des Weiteren ist nachteilig, dass bei fehlerhaften Markierungen fehlerhafte Kalibrierungen erfolgen.

WO 01/77763 A1 zeigt einen kamerabasierten Fahrzeugregensensor. Hintergrundbildinformationen bzw. - helligkeiten, die z.B. von bekannten Strukturen der Fahrbahn, insbesondere von Fahrspurmarkierungen, stammen, können im Rahmen der Bildverarbeitung zum Zweck der Regenerkennung entfernt werden.

Der Erfindung liegt die Aufgabe zugrunde, ein verbessertes Verfahren zur Kalibrierung eines kamerabasierten Systems eines Fahrzeugs mit einer Scheibe, insbesondere eines kamerabasierten Fahrerassistenzsystems, anzugeben.

Die Aufgabe wird erfindungsgemäß durch die Merkmale des Anspruchs 1 gelöst.

Vorteilhafte Weiterbildungen der Erfindung sind Gegenstand der Unteransprüche.

Erfindungsgemäß wird ein Typ der Scheibe, insbesondere dessen Tönung, d. h. Farbwert und Tönungsgrad, mittels des kamerabasierten Systems automatisch erkannt.

Mittels der erfindungsgemäßen Lösung ist das kamerabasierte System nach einem Austausch der Scheibe automatisch neu kalibrierbar, wodurch eine optimale Funktionalität des Systems sichergestellt ist. Dieses Verfahren funktioniert bei Scheiben nach dem Stand der Technik, d. h. spezielle, beispielsweise mit einer Markierung versehene Scheiben sind hierfür nicht erforderlich, wodurch keine zusätzlichen Kosten entstehen. Durch die automatische Kalibrierung ist eine aufwändige zeit- und kostenintensive manuelle Kalibrierung, welche beispielsweise in einer Fachwerkstatt durchgeführt werden muss, nicht mehr erforderlich. Insbesondere ermöglicht das erfindungsgemäße Verfahren einen fehlerfreien Betrieb des kamerabasierten Systems selbst dann, wenn die ursprünglich eingesetzte Scheibe durch eine Scheibe anderer Bauart ausgetauscht wurde.

Zweckmäßigerweise wird ein automatischer Vergleich von mittels des kamerabasierten Systems ermittelten Werten, beispielsweise Helligkeitswerten und/oder Farbwerten, mit entsprechenden hinterlegten Daten vorgenommen. Dazu werden in einer ersten erfindungsgemäßen Ausführungsform entsprechende Werte von erfassten Fahrbahnabschnitten ermittelt, da Fahrbahnbeläge eine farblich weitgehend übereinstimmende Oberfläche aufweisen.

In einer weiteren erfindungsgemäßen Ausführungsform werden, insbesondere bei Dunkelheit, Werte von erfassten externen Lichtquellen ermittelt, wobei eine derartige Lichtquelle besonders bevorzugt ein Scheinwerferlicht entgegenkommender Fahrzeuge ist, da Scheinwerferlicht international standardisiert weiß bis hellgelb ist. Aus den ermittelten Werten wird vorzugsweise ein Durchschnittswert des Scheinwerferlichts gebildet und mit einem im kamerabasierten System gespeicherten Normwert eines Referenz-Scheinwerferlichts abgeglichen.

In einer Weiterbildung der Erfindung werden die Werte des Scheinwerferlichts und/oder der Durchschnittswert des Scheinwerferlichts bildpositionsabhängig ermittelt. Hierdurch wird die Korrelation der Bildposition mit der Distanz und die Abhängigkeit der Helligkeit der Scheinwerfer von der Distanz berücksichtigt.

Um die Sicherheit des Verfahrens zu optimieren, wird in vorteilhafter Weise ein vorgegebener Bildausschnitt statistisch ausgewertet, d. h. nicht ein gesamter erfasster Bereich, sondern nur ein vorgegebener Bildausschnitt. Dieser Bildausschnitt wird zweckmäßigerweise so vorgegeben, dass er beispielsweise den Fahrbahnbelag des Fahrbahnabschnitts vor dem Fahrzeug erfasst.

Vorzugsweise wird zur Ermittlung von Helligkeitswerten und/oder Farbwerten eine Farbkamera verwendet und es erfolgt zweckmäßigerweise eine elektronische Bildverarbeitung. Insbesondere um Farbwerte und Tönungswerte sicher erfassen zu können, ist eine Farbkamera von Vorteil. Derartige Farbkameras sind bereits bei kamerabasierten Systemen, insbesondere bei kamerabasierten Fahrerassistenzsystemen, im Einsatz. Mittels der elektronischen Bildverarbeitung sind die ermittelten Werte auswertbar.

In vorteilhafter Weise werden Parameter des kamerabasierten Systems entsprechend des erkannten Typs der Scheibe automatisch angepasst, wobei diese Anpassung der Parameter in einer besonders günstigen Ausführungsform durch eine Auswahl der für den Typ der Scheibe im kamerabasierten System gespeicherten Parameter erfolgt. Sind für jeden Typ der Scheibe, welcher in das Fahrzeug eingebaut werden kann, entsprechende Parameter im kamerabasierten System hinterlegt, kann sofort, nachdem der Typ der Scheibe erkannt wurde, ein entsprechender Parametersatz automatisch ausgewählt werden, so dass das kamerabasierte System beispielsweise nach einem Scheibenwechsel sofort automatisch optimal neu kalibriert ist und somit weiterhin voll funktionsfähig ist.

Bei einer digitalen Bildverarbeitung und insbesondere bei einer Farbwertermittlung, wie dies bei Scheiben unterschiedlicher Farbe und/oder mit einem unterschiedlichen Transmissionsgrad erforderlich ist, stellt eine Normierung eines Farbraums auf Weiß, der so genannte Weißabgleich, nach dem Stand der Technik eine große Herausforderung dar. Das Verfahren bietet auf einfache Weise eine sehr effiziente Möglichkeit des Weißabgleichs und somit eine optimale Kalibrierung des kamerabasierten Systems, da dieser Weißabgleich automatisch durchgeführt wird und regelmäßig durchführbar ist. Der Weißabgleich des kamerabasierten Systems wird vorzugsweise durch einen Vergleich des Durchschnittswertes des Scheinwerferlichts mit dem im kamerabasierten System gespeicherten Normwert des Referenz-Scheinwerferlichts durchgeführt und die Parameter des Systems automatisch entsprechend angepasst, so dass der nach der Anpassung ermittelte Durchschnittswert des Scheinwerferlicht mit dem gespeicherten Normwert übereinstimmt.

Die Erfindung wird im Folgenden anhand von Ausführungsbeispielen erläutert. Einander entsprechende Teile sind dabei mit den gleichen Bezugszeichen versehen.

Dabei zeigen:
- FIG 1: eine schematische Darstellung eines kamerabasierten Systems in einem Fahrzeug,
- FIG 2: eine schematische Darstellung eines ersten Bildausschnitts, und
- FIG 3: eine Darstellung eines zweiten Bildausschnitts.

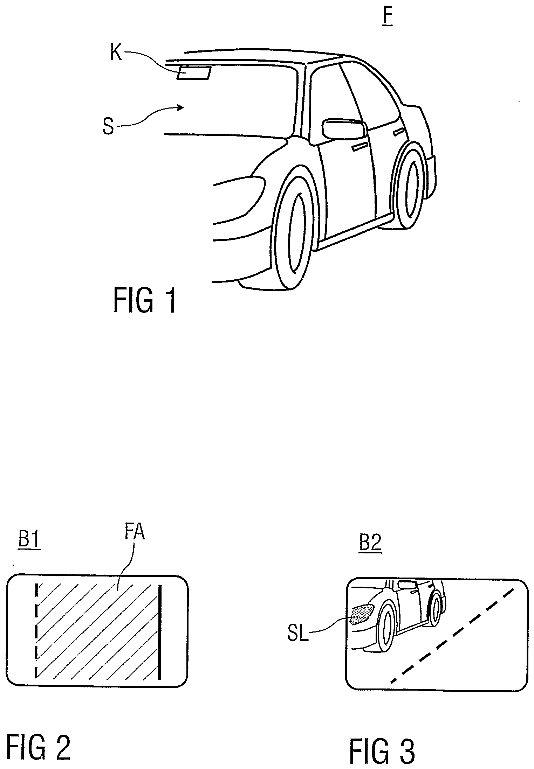

Figur 1 zeigt eine schematische Darstellung eines kamerabasierten Systems in einem Fahrzeug F. Im hier dargestellten Ausführungsbeispiel ist eine Kamera K, vorzugsweise eine Farbkamera, des kamerabasierten Systems in einem Innenraum des Fahrzeugs F hinter einer Scheibe S, im hier dargestellten Ausführungsbeispiel hinter einer Frontscheibe des Fahrzeugs F, angeordnet und nach außen auf einen Bereich vor dem Fahrzeug F gerichtet. Das kamerabasierte System umfasst des Weiteren eine hier nicht näher dargestellte elektronische Bildverarbeitung. Beispielsweise nach einem Austausch der Scheibe S, hinter der die Kamera K angeordnet ist, muss das kamerabasierte System neu kalibriert werden, um weiterhin voll funktionsfähig zu sein, wenn die Frontscheibe durch eine Scheibe S eines anderen Typs ersetzt wird, da Scheiben S verschiedenen Typs unterschiedliche Farb-, Transmissions- und/oder Tönungseigenschaften aufweisen können.

Figur 2 zeigt eine schematische Darstellung eines ersten Bildausschnitts B1, welcher statistisch ausgewertet wird. Der Bildausschnitt B1 ist derart vorgegeben, dass er einen Fahrbahnbelag eines Fahrbahnabschnittes FA vor dem Fahrzeug F erfasst. Derartige Fahrbahnbeläge weisen eine farblich weitgehend übereinstimmende graue Oberfläche auf. Sind Daten dieser Fahrbahnbeläge, d. h. beispielsweise Farbdaten und/oder Helligkeitsdaten, im kamerabasierten System gespeichert, können sie mit aktuell ermittelten Werten verglichen werden. Bei einer Abweichung ist das kamerabasierten System nicht optimal kalibriert und muss neu kalibriert werden, um optimal zu funktionieren. Dies ist beispielsweise nach einem Austausch der Scheibe S, hinter welcher die Kamera K angeordnet ist, der Fall, wenn, wie im hier dargestellten Ausführungsbeispiel, die Frontscheibe durch eine Scheibe S eines anderen Typs ersetzt wird, da Scheiben S verschiedenen Typs unterschiedliche Farb-, Transmissions- und/oder Tönungseigenschaften aufweisen können. Da aktuelle Parameter des kamerabasierten Systems bekannt sind, kann durch Vergleich der aktuell ermittelten Werte mit den gespeicherten Werten anhand eines Ausmaßes der Abweichung der Werte voneinander der Typ der neu eingesetzten Scheibe S ermittelt werden und die zu diesem Typ passenden Parameter, welche sinnvollerweise im System gespeichert sind, automatisch ausgewählt und eingestellt werden, wodurch das kamerabasierte System automatisch neu kalibriert ist. Danach ist die optimale Funktionsfähigkeit wieder hergestellt. Durch diese automatische Kalibrierung ist eine manuelle zeit- und kostenintensive Kalibrierung beispielsweise in einer Fachwerkstatt nicht mehr erforderlich. Zusätzliche kostenintensive Maßnahmen, wie beispielsweise ausschließlich ein Einsatz von speziell markierten Scheiben, sind ebenfalls nicht erforderlich.

Figur 3 zeigt eine weitere, alternative oder zusätzliche Ausführungsform des Verfahrens. Hier ist ein zweiter Bildausschnitt B2, welcher statistisch ausgewertet wird, derart vorgegeben, dass bei Dunkelheit Scheinwerferlicht SL entgegenkommender Fahrzeuge erfasst wird. Scheinwerferlicht SL von Fahrzeugen ist international standardisiert weiß bis hellgelb. Wird aus den ermittelten Werten des Scheinwerferlichts SL mehrerer Fahrzeuge ein Durchschnittswert gebildet und mit einem im kamerabasierten System gespeicherten Normwert eines Referenz-Scheinwerferlichts verglichen, so kann, analog zum unter Figur 2 geschilderten Vorgehen mittels des Fahrbahnbelages, festgestellt werden, ob eine Abweichung vorliegt und daher das kamerabasierte System neu kalibriert werden muss, um optimal zu funktionieren. Ist dies der Fall, beispielsweise nach einem Austausch der Scheibe S, kann durch Vergleich der aktuell ermittelten Werte mit den gespeicherten Werten und unter Einbeziehung der aktuell eingestellten Parameter des kamerabasierten Systems anhand eines Ausmaßes der Abweichung der Werte voneinander der Typ der neu eingesetzten Scheibe S ermittelt werden und die zu diesem Typ passenden Parameter, welche sinnvollerweise im System gespeichert sind, automatisch ausgewählt und eingestellt werden. Danach ist das kamerabasierte System automatisch neu kalibriert, so dass seine optimale Funktionsfähigkeit wieder hergestellt ist.

Dabei erfolgt die Ermittlung der Werte des Scheinwerferlichts SL und/oder der Durchschnittswerte des Scheinwerferlichts SL vorzugsweise bildpositionsabhängig.

Die unter Figur 3 dargestellte, alternative oder zusätzliche Ausführungsform des Verfahrens bietet als weiteren Vorteil auf effiziente Weise einen einfach, da automatisch durchzuführenden Weißabgleich des kamerabasierten Systems. Ein solcher Weißabgleich, welcher für eine optimale Funktionsfähigkeit des kamerabasierten Systems erforderlich ist, stellt nach dem Stand der Technik noch immer eine große Herausforderung dar, insbesondere eine automatische Ausführung des Weißabgleichs. Der Weißabgleich ist durch den Vergleich des Durchschnittswerts des Scheinwerferlichts SL mit dem im kamerabasierten System gespeicherten Normwert des Referenz-Scheinwerferlichts durchführbar. Bei einer Abweichung werden die Parameter des kamerabasierten Systems automatisch entsprechend angepasst, bis der nach der Anpassung ermittelte Durchschnittswert des Scheinwerferlichts SL mit dem gespeicherten Normwert übereinstimmt.

### Bezugszeichenliste

- B1, B2: Bildausschnitt
- F: Fahrzeug
- FA: Fahrbahnabschnitt
- K: Kamera
- S: Scheibe
- SL: Scheinwerferlicht

## Patentansprüche

1. Verfahren zur Kalibrierung eines kamerabasierten Systems eines Fahrzeugs (F) mit einer Scheibe (S), insbesondere eines kamerabasierten Fahrerassistenzsystems, wobei ein Typ der Scheibe (S) mittels des kamerabasierten Systems durch ihren Farbwert oder Tönungsgrad automatisch erkannt wird, und
wobei ein automatischer Vergleich von mittels des kamerabasierten Systems ermittelten Helligkeits- und/oder Farbwerten von mindestens einem durch die Scheibe (S) erfassten Fahrbahnabschnitten (FA) oder externen Lichtquellen mit entsprechenden hinterlegten Daten vorgenommen wird, wobei durch Vergleich der aktuell ermittelten Werte mit den hinterlegten Daten anhand eines Ausmaßes der Abweichung der Werte voneinander der Typ einer neu eingesetzten Scheibe (S) ermittelt wird und durch die zu diesem Typ passenden Parameter automatisch ausgewählt und eingestellt werden, wodurch das kamerabasierte System automatisch neu kalibriert ist.

2. Verfahren nach Anspruch 1,
**dadurch gekennzeichnet, dass** die Helligkeits- und/oder Farbwerte eines Scheinwerferlichts (SL) entgegenkommender Fahrzeuge ermittelt werden.

3. Verfahren nach Anspruch 2,
**dadurch gekennzeichnet, dass** aus diesen Helligkeits- und/oder Farbwerten ein Durchschnittswert des Scheinwerferlichts (SL) gebildet wird.

4. Verfahren nach Anspruch 2 oder 3,
**dadurch gekennzeichnet, dass** die die Helligkeits- und/oder Farbwerte des Scheinwerferlichts (SL) und/oder der Durchschnittswert des Scheinwerferlichts (SL) bildpositionsabhängig ermittelt werden.

5. Verfahren nach einem der vorhergehenden Ansprüche,
**dadurch gekennzeichnet, dass** ein vorgegebener Bildausschnitt (B1, B2) statistisch ausgewertet wird.

6. Verfahren nach einem der vorhergehenden Ansprüche,
**dadurch gekennzeichnet, dass** zur Ermittlung der Helligkeits- und/oder Farbwerte eine Farbkamera verwendet wird.

7. Verfahren nach einem der vorhergehenden Ansprüche,
**dadurch gekennzeichnet, dass** eine elektronische Bildverarbeitung erfolgt.

8. Verfahren nach einem der vorhergehenden Ansprüche,
**dadurch gekennzeichnet, dass** Parameter des kamerabasierten Systems entsprechend des erkannten Typs der Scheibe (S) automatisch angepasst werden.

9. Verfahren nach Anspruch 8,
**dadurch gekennzeichnet, dass** diese Anpassung der Parameter durch eine Auswahl der für den Typ der Scheibe (S) im kamerabasierten System gespeicherten Parameter erfolgt.

10. Verfahren nach einem der vorhergehenden Ansprüche,
**dadurch gekennzeichnet, dass** durch einen Vergleich des Durchschnittswertes des Scheinwerferlichts (SL) mit einem im kamerabasierten System gespeicherten Normwert eines Referenz-Scheinwerferlichts ein Weißabgleich des kamerabasierten Systems durchgeführt wird.

## Claims

1. A method for calibrating a camera-based system of a vehicle (F) having a windscreen (S), in particular a camera-based driver assistance system,
wherein a type of windscreen (S) is automatically detected by means of the camera-based system by its colour value or tinting, and
wherein
an automatic comparison of brightness and/or colour values of at least one of the road sections (FA) or external light sources captured through the windscreen (S), which are determined by means of the camera-based system, is carried out with corresponding stored data, wherein by comparing the currently determined values with the stored data on the basis of an extent of the deviation of the values from one another, the type of a newly inserted windscreen (S) is established and through this suitable parameters for this type are automatically selected and adjusted, as a result of which the camera-based system is automatically recalibrated.

2. The method according to Claim 1,
**characterised in that** the brightness and/or colour values of a headlight beam (SL) of oncoming vehicles are determined.

3. The method according to Claim 2,
**characterised in that** an average value of the headlight beam (SL) is produced from these brightness and/or colour values.

4. The method according to Claim 2 or 3,
**characterised in that** the brightness and/or colour values of the headlight beam (SL) and/or the average value of the headlight beam (SL) is/are determined depending on the image position.

5. The method according to any one of the preceding claims, **characterised in that** a predefined image section (B1, B2) is statistically evaluated.

6. The method according to any one of the preceding claims, **characterised in that** a colour camera is used to establish the brightness and/or colour values.

7. The method according to any one of the preceding claims, **characterised in that** an electronic image processing takes place.

8. The method according to any one of the preceding claims, **characterised in that** parameters of the camera-based system are automatically adapted in accordance with the detected type of windscreen (S).

9. The method according to Claim 8,
**characterised in that** the parameters are adapted by a selection of the parameters (S) saved in the camera-based system for the type of windscreen (S).

10. The method according to any one of the preceding claims, **characterised in that** by means of a comparison of the average value of the headlight beam (SL) with a standard value of a reference headlight beam saved in the camera-based system, a white balance of the camera-based system is carried out.

## Revendications

1. Procédé pour le calibrage d'un système basé sur caméra d'un véhicule (F) avec une vitre (S), en particulier d'un système d'aide à la conduite basé sur caméra,
un type de la vitre (S) étant détecté automatiquement au moyen du système basé sur caméra par sa valeur chromatique ou son degré de teinte, et
une comparaison automatique de valeurs de luminosité et/ou de valeurs chromatiques d'au moins une section de chaussée (FA) ou de sources lumineuses externes détectées à travers la vitre (S), déterminées au moyen du système basé sur caméra, avec des données enregistrées correspondantes étant effectuée, le type d'une vitre (S) nouvellement utilisée étant détecté par la comparaison des valeurs déterminées actuelles avec les données enregistrées au moyen d'une grandeur de l'écart des valeurs entre elles, et les paramètres convenant à ce type étant sélectionnés et réglés automatiquement, le système basé sur caméra étant par cela automatiquement calibré de nouveau.

2. Procédé selon la revendication 1,
**caractérisé en ce que** les valeurs de luminosité et/ou les valeurs chromatiques d'une lumière de phares (SL) de véhicules venant en sens inverse sont détectées.

3. Procédé selon la revendication 2,
**caractérisé en ce qu'**une valeur moyenne de la lumière de phares (SL) est formée à partir de ces valeurs de luminosité et/ou de ces valeurs chromatiques.

4. Procédé selon la revendication 2 ou 3,
**caractérisé en ce que** les valeurs de luminosité et/ou les valeurs chromatiques de la lumière de phares (SL) et/ou la valeur moyenne de la lumière de phares (SL) sont détectées en fonction d'une position d'image.

5. Procédé selon l'une des revendications précédentes, **caractérisé en ce qu'**une section d'image spécifiée (B1, B2) est évaluée de façon statistique.

6. Procédé selon l'une des revendications précédentes, **caractérisé en ce qu'**une caméra couleur est utilisée pour la détection des valeurs de luminosité et/ou des valeurs chromatiques.

7. Procédé selon l'une des revendications précédentes, **caractérisé en ce qu'**un traitement d'images électronique est effectué.

8. Procédé selon l'une des revendications précédentes, **caractérisé en ce que** des paramètres du système basé sur caméra sont automatiquement ajustés en fonction du type détecté de la vitre (S).

9. Procédé selon la revendication 8,
**caractérisé en ce que** cet ajustage des paramètres est effectué par une sélection des paramètres enregistrés dans le système basé sur caméra pour le type de la vitre (S).

10. Procédé selon l'une des revendications précédentes, **caractérisé en ce qu'**une balance des blancs du système basé sur caméra est effectuée par une comparaison de la valeur moyenne de la lumière de phares (SL) avec une valeur normale d'une lumière de phare de référence enregistrée dans le système basé sur caméra.
